# EUROPEAN PATENT APPLICATION

(11) **EP 3 499 778 A1**
(43) Date of publication of application: **19.06.2019**
(21) Application number: 17838666.0
(22) Date of filing: 07.08.2017
(51) Int. Cl.: H04L 5/00, H04W 24/02

(54) **METHOD AND APPARATUS FOR CONFIGURING AND DETERMINING REFERENCE SIGNAL, BASE STATION, AND TERMINAL**

(30) Priority: 12.08.2016 CN 201610670236
(71) Applicant: ZTE Corporation, Shenzhen, Guangdong 518057 (CN)
(72) Inventor: WU, Hao, Shenzhen Guangdong 518057 (CN); LI, YU Ngok, Shenzhen Guangdong 518057 (CN); CHEN, Yijian, Shenzhen Guangdong 518057 (CN); XIAO, Huahua, Shenzhen Guangdong 518057 (CN); LU, Zhaohua, Shenzhen Guangdong 518057 (CN); CAI, Jianxing, Shenzhen Guangdong 518057 (CN); WANG, Yuxin, Shenzhen Guangdong 518057 (CN); LI, Yong, Shenzhen Guangdong 518057 (CN)
(74) Representative: Regimbeau
(86) International application number: PCT/CN2017/096180
(87) International publication number: WO 2018/028536

(57) **Abstract**

Provided are a method and apparatus for configuring and determining a reference signal, a base station, and a terminal. The method comprises: a base station configuring first-type measurement configuration information and second-type measurement configuration information; and the base station using a parameter set to jointly indicate the first-type measurement configuration information and the second-type measurement configuration information to a terminal, wherein the first-type measurement configuration information is associated with a first-type reference signal, and the second-type measurement configuration information is associated with a second-type reference signal. By means of the embodiments of the invention, the technical problem in the related art of the low accuracy of channel measurement and channel information feedback is solved.

## Description

### TECHNICAL FIELD

Embodiments of the present invention relate to communications and, in particular, to a method and apparatus for configuring and determining a reference signal, a base station, and a terminal.

### BACKGROUND

In a wireless communication system, a transmitting end and a receiving end generally use multiple antennas to transmit and receive to obtain a higher rate. One principle of the multi-antenna technology is to utilize some of channel features to form multi-layer transmission that matches the channel features. The radiation direction of a signal is targeted and thus can effectively improve system performance. The multi-antenna technology significantly improves performance without increasing bandwidth and power. It is a promising technology that is widely used in current systems. The data transmission performance of a multi-antenna system depends on the measurement and feedback of channel information. Therefore, the measurement and feedback of channel information is the core content of the multi-antenna technology; how to ensure the accuracy, costs and robustness of channel measurement and channel information feedback has become an important issue.

The following describes some of the basics related to CSI measurement and quantitative feedback in the existing art of this application:

### Channel State Information (CSI) measurement reference signal:

The channel state information reference signal (CSI-RS) can be set as measurement of downlink channel information. CSI-RS is divided into two categories: non-precoded CSI-RS (NP CSI-RS) and precoded CSI-RS. For NP CSI-RS, a base station acquires channel state information by the following modes: the base station transmits a pilot at all ports and a user receives the pilot, and measures and feeds back channel information. For precoded CSI-RS, the base station configures a precoding matrix for different port groups, and loads the CSI-RS onto the precoding matrix and transmits the CSI-RS on the precoding matrix on K sets of CSI-RS resources (K ≥ 1), and the user measures an equivalent channel and feeds back the best CSI on the CSI-RS resources.

### Two CSI feedback methods:

A terminal feeds back the CSI in two ways: the base station can configure the terminal to measure and quantize the channel information and to feed back the quantized CSI information (including RI/PMI/CQI) periodically through an uplink control channel (PUCCH). If needed, the base station can also trigger the terminal aperiodically abruptly to report CSI (including rank indication (RI), precoding matrix indication (PMI) and channel quality indication (CQI)) so as to overcome the problem where the periodic feedback is not in real time and the CSI quantization accuracy is limited by overheads of the control channel.

### Two CSI feedback types:

There are two types of channel information measurement and feedback: Class A and Class B.

Class A: The base station transmits CSI-RS, which is generally a non-precoded pilot. The UE directly performs channel measurement and CSI quantization on the basis of this CSI-RS pilot to obtain RI/PMI/CQI. The content is fed back on the PUCCH or the Physical Uplink Shared Channel (PUSCH). The feedback content is large, including the beam direction of the broadband.

Class B: The CSI-RS transmitted by the base station is generally a precoded pilot. The UE may need to perform precoded pilot selection first, and then perform quantitative feedback of channel information on the basis of the selected CSI-RS pilot, including CSI-RS resource index (CRI) selection information and RI/PMI/CQI information corresponding to the selected CSI-RS measurement resource subset.

In the related art, the base station periodically transmits the precoded CSI-RS, but cannot obtain the precoding matrix of the precoded CSI-RS accurately. Additionally, in the related art, the precoded and non-precoded CSI-RSs are independently configured such that the efficiency is low in determining parameter signals.

No effective solution has been found to solve the preceding problem in the related art.

### SUMMARY

Embodiments of the present invention provide a method and apparatus for configuring and determining a reference signal, a base station, and a terminal to solve at least the problem where the accuracy of channel measurement and channel information feedback is low in the existing art.

According to an embodiment of the present invention, a method for configuring a reference signal is provided. The method includes: using a base station to configure first-type measurement configuration information and second-type measurement configuration information; and using the base station to use a parameter set to jointly indicate the first-type measurement configuration information and the second-type measurement configuration information to a terminal, where the first-type measurement configuration information is associated with a first-type reference signal, and the second-type measurement configuration information is associated with a second-type reference signal.

Optionally, the parameter set includes: information for indicating a period of the first-type reference signal, and/or information for indicating a period of the second-type reference signal.

Optionally, the period of the first-type reference signal is greater than or equal to T1 subframes, and T1 is a positive integer greater than zero.

Optionally, the base station determines a value of the T1 by one or more of the following pieces of information: information about terminal capability classification; information about a maximum number of reference signal resources processable by the terminal; and information about a maximum number of reference signal ports processable by the terminal.

Optionally, the period of the first-type reference signal is greater than the period of the second-type reference signal.

Optionally, the base station jointly indicates the period of the first-type reference signal and/or the period of the second-type reference signal to the terminal in the parameter set by one or more of the following modes: the base station indicates the period of the first-type reference signal and a parameter for describing a relationship between periods of two types of reference signals; and the base station indicates the period of the second-type reference signal and the parameter for describing the relationship between the periods of the two types of reference signals, where the two types of reference signals are the first-type reference signal and the second-type reference signal.

Optionally, the parameter for describing the relationship between the periods of the two types of reference signals includes: information for indicating a multiple relationship between the period of the first-type reference signal and the period of the second-type reference signal or information for indicating a difference relationship between the period of the first-type reference signal and the period of the second-type reference signal.

Optionally, the parameter set includes: information for indicating power of the first-type reference signal on each resource unit and power of the second-type reference signal on each resource unit.

Optionally, the power of the first-type reference signal on the resource unit is greater than the power of the second-type reference signal on the resource unit.

Optionally, the base station jointly indicates the power of the first-type reference signal and/or the power of the second-type reference signal in the parameter set by one or more of the following modes: the base station indicates the power of the first-type reference signal on each resource unit and a parameter for describing a relationship between power of two types of reference signals; and the base station indicates the power of the second-type reference signal on each resource unit and the parameter for describing the relationship between the power of the two types of reference signals.

Optionally, the parameter for describing the relationship between the power of the two types of reference signals includes: information for indicating a multiple relationship between the power of the first-type reference signal and the power of the second-type reference signal on the each resource unit or information for indicating a difference relationship between the power of the first-type reference signal and the power of the second-type reference signal on the each resource unit.

Optionally, the parameter set includes: information for indicating codebook subset restriction of the first-type reference signal, where the codebook subset restriction is not enabled for the second-type reference signal.

Optionally, the first-type measurement configuration information is configuration information of a first-type interference measurement resource associated with the first-type reference signal, and the second-type measurement configuration information is configuration information of a second-type interference measurement resource associated with the second-type reference signal.

Optionally, the parameter set includes: information for jointly indicating interference measurement restriction.

Optionally, using the base station to configure the first-type measurement configuration information and the second-type measurement configuration information includes: using the base station to configure a same interference measurement restriction state for the first-type interference measurement resource and the second-type interference measurement resource.

Optionally, the parameter set includes: information for indicating a period of the first-type interference measurement resource, and/or information for indicating a period of the second-type interference measurement resource.

Optionally, the period of the first-type interference measurement resource is not less than T2 subframes, and T2 is a positive integer greater than 0.

Optionally, the base station determines a value of the T2 by one or more of the following pieces of information: information about terminal capability classification; information about a maximum number of reference signal resources processable by the terminal; and information about a maximum number of reference signal ports processable by the terminal.

Optionally, the period of the first-type interference measurement resource is greater than the period of the second-type interference measurement resource.

Optionally, the base station jointly indicates the period of the first-type interference measurement resource and/or the period of the second-type interference measurement resource to the terminal in the parameter set by one or more of the following modes: the base station indicates the period of the first-type interference measurement resource and a parameter for describing a relationship between periods of two types of interference measurement resources; and the base station indicates the period of the second-type interference measurement resource and the parameter for describing the relationship between the periods of the two types of interference measurement resources.

Optionally, the parameter for describing the relationship between the periods of the two types of interference measurement resources includes: information for indicating a multiple relationship between the period of the first-type interference measurement resource and the period of the second-type interference measurement resource or information for indicating a difference relationship between the period of the first-type interference measurement resource and the period of the second-type interference measurement resource.

Optionally, the first-type measurement configuration information is feedback configuration information of CSI obtained by measuring the first-type reference signal, and the second-type measurement configuration information is feedback configuration information of CSI obtained by measuring the second-type reference signal.

Optionally, the feedback configuration information is feedback mode configuration information, which includes at least one of the following: a feedback mode of the CSI obtained based on the first-type reference signal is a periodic feedback, and a feedback mode of the CSI obtained based on the second-type reference signal is the periodic feedback; the feedback mode of the CSI obtained based on the first-type reference signal is the periodic feedback, and the feedback mode of the CSI obtained based on the second-type reference signal is an aperiodic feedback; the feedback mode of the CSI obtained based on the first-type reference signal is the aperiodic feedback, and the feedback mode of the CSI obtained based on the second-type reference signal is the periodic feedback.

Optionally, the parameter set includes: information for indicating a feedback period of the CSI obtained by measuring the first-type reference signal, and/or information for indicating a feedback period of the CSI obtained by measuring the second-type reference signal.

Optionally, the CSI obtained by measuring the first-type reference signal is not less than T3 subframes, and the T3 is a positive integer greater than zero.

Optionally, the base station determines a value of the T3 by one or more of the following pieces of information: information about terminal capability classification; information about a maximum number of reference signal resources processable by the terminal; and information about a maximum number of reference signal ports processable by the terminal.

Optionally, the feedback period of the CSI obtained by measuring the first-type reference signal is greater than the feedback period of the CSI obtained by measuring the second-type reference signal.

Optionally, the base station jointly indicates the feedback period of the CSI obtained by measuring the first-type reference signal and/or the feedback period of the CSI obtained by measuring the second-type reference signal to the terminal in the parameter set by one or more of the following modes:

The base station indicates the feedback period of the CSI obtained by measuring the first-type reference signal and a parameter for describing a relationship between two types of feedback periods.

The base station indicates the feedback period of the CSI obtained by measuring the second-type reference signal and the parameter for describing the relationship between the two types of feedback periods.

Optionally, the parameter for describing the relationship between the two types of feedback periods includes: information for indicating a multiple relationship between the feedback period of the CSI obtained by measuring the first-type reference signal and the feedback period of the CSI obtained by measuring the second-type reference signal or information for indicating a difference relationship between the feedback period of the CSI obtained by measuring the first-type reference signal and the feedback period of the CSI obtained by measuring the second-type reference signal.

Optionally, the parameter set includes: information for triggering the aperiodic CSI feedback.

Optionally, the parameter set corresponds to one measurement feedback process.

Optionally, according to whether there are two types of measurement configuration information, the terminal determines a time interval between a CSI reference resource time-domain location corresponding to the first-type reference signal and a time-domain location reported by CSI and/or a time interval between a CSI reference resource time-domain location corresponding to the second-type reference signal and the time-domain location reported by the CSI.

Optionally, the first-type reference signal is a non-precoded reference signal and the second-type reference signal is a precoded reference signal; or the first-type reference signal and the second-type reference signal are non-precoded reference signals having at least one of the following parameters being different: resource and port; or the first-type reference signal and the second-type reference signal are precoded reference signals having at least one of the following parameters being different: resource and port.

Optionally, the parameter set includes: information for triggering the aperiodic CSI feedback.

According to another embodiment of the present invention, a method for determining a reference signal is provided. The method includes: using the terminal to determine the first-type measurement configuration information and the second-type measurement configuration information according to the parameter set, where the first-type measurement configuration information is associated with a first-type reference signal, and the second-type measurement configuration information is associated with a second-type reference signal.

Optionally, the parameter set includes: information for indicating a period of the first-type reference signal, and/or information for indicating a period of the second-type reference signal.

Optionally, the period of the first-type reference signal is greater than or equal to T1 subframes, and T1 is a positive integer greater than zero.

Optionally, the terminal determines a value of the T1 by reporting one or more of the following pieces of information: information about terminal capability classification; information about a maximum number of reference signal resources processable by the terminal; and information about a maximum number of reference signal ports processable by the terminal.

Optionally, the period of the first-type reference signal is greater than the period of the second-type reference signal.

Optionally, the terminal determines the period of the first-type reference signal and/or the period of the second-type reference signal in the parameter set by one or more of the following modes:
The terminal acquires the period of the first-type reference signal and a parameter for describing a relationship between periods of two types of reference signal.

The terminal acquires the period of the second-type reference signal and the parameter for describing the relationship between the periods of the two types of reference signals, where the two types of reference signals are the first-type reference signal and the second-type reference signal.

Optionally, the parameter for describing the relationship between the periods of the two types of reference signals includes: information for indicating a multiple relationship between the period of the first-type reference signal and the period of the second-type reference signal or information for indicating a difference relationship between the period of the first-type reference signal and the period of the second-type reference signal.

Optionally, the parameter set includes: information for indicating power of the first-type reference signal on each resource unit and power of the second-type reference signal on each resource unit.

Optionally, the power of the first-type reference signal on the resource unit is greater than the power of the second-type reference signal on the resource unit.

Optionally, the terminal jointly determines the power of the first-type reference signal and/or the power of the second-type reference signal in the parameter set by one or more of the following modes: the terminal acquires the power of the first-type reference signal on each resource unit and a parameter for describing a relationship between power of two types of reference signals; and the terminal acquires the power of the second-type reference signal on each resource unit and the parameter for describing the relationship between the power of the two types of reference signals.

Optionally, the parameter for describing the relationship between the power of the two types of reference signals includes: information for indicating a multiple relationship between the power of the first-type reference signal and the power of the second-type reference signal on the each resource unit or information for indicating a difference relationship between the power of the first-type reference signal and the power of the second-type reference signal on the each resource unit.

Optionally, the parameter set includes: information for indicating codebook subset restriction of the first-type reference signal, where the codebook subset restriction is not enabled for the second-type reference signal.

Optionally, the first-type measurement configuration information is configuration information of a first-type interference measurement resource associated with the first-type reference signal, and the second-type measurement configuration information is configuration information of a second-type interference measurement resource associated with the second-type reference signal.

Optionally, the parameter set includes: information for jointly indicating interference measurement restriction.

Optionally, the first-type interference measurement resource and the second-type interference measurement resource have a same interference measurement restriction state.

Optionally, the parameter set includes: information for indicating a period of the first-type interference measurement resource, and/or information for indicating a period of the second-type interference measurement resource.

Optionally, the period of the first-type interference measurement resource is not less than T2 subframes, and T2 is a positive integer greater than 0.

Optionally, the base station determines a value of the T2 by one or more of the following pieces of information: information about terminal capability classification; information about a maximum number of reference signal resources processable by the terminal; and information about a maximum number of reference signal ports processable by the terminal.

Optionally, the period of the first-type interference measurement resource is greater than the period of the second-type interference measurement resource.

Optionally, the terminal jointly determines the period of the first-type interference measurement resource and/or the period of the second-type interference measurement resource in the parameter set by one or more of the following modes: the terminal acquires the period of the first-type interference measurement resource and a parameter for describing a relationship between periods of two types of interference measurement resources; and the terminal acquires the period of the second-type interference measurement resource and the parameter for describing the relationship between the periods of the two types of interference measurement resources.

Optionally, the parameter for describing the relationship between the periods of the two types of interference measurement resources includes: information for indicating a multiple relationship between the period of the first-type interference measurement resource and the period of the second-type interference measurement resource or information for indicating a difference relationship between the period of the first-type interference measurement resource and the period of the second-type interference measurement resource.

Optionally, the first-type measurement configuration information is feedback configuration information of CSI obtained by measuring the first-type reference signal, and the second-type measurement configuration information is feedback configuration information of CSI obtained by measuring the second-type reference signal.

Optionally, the feedback configuration information is feedback mode configuration information, which includes at least one of the following: a feedback mode of the CSI obtained based on the first-type reference signal is a periodic feedback, and a feedback mode of the CSI obtained based on the second-type reference signal is the periodic feedback; the feedback mode of the CSI obtained based on the first-type reference signal is the periodic feedback, and the feedback mode of the CSI obtained based on the second-type reference signal is an aperiodic feedback; the feedback mode of the CSI obtained based on the first-type reference signal is the aperiodic feedback, and the feedback mode of the CSI obtained based on the second-type reference signal is the periodic feedback.

Optionally, the parameter set includes: information for indicating a feedback period of the CSI obtained by measuring the first-type reference signal, and/or information for indicating a feedback period of the CSI obtained by measuring the second-type reference signal.

Optionally, the CSI obtained by measuring the first-type reference signal is not less than T3 subframes, and the T3 is a positive integer greater than zero.

Optionally, the terminal determines a value of the T3 by reporting one or more of the following pieces of information: information about terminal capability classification; information about a maximum number of reference signal resources processable by the terminal; and information about a maximum number of reference signal ports processable by the terminal.

Optionally, the feedback period of the CSI obtained by measuring the first-type reference signal is greater than the feedback period of the CSI obtained by measuring the second-type reference signal.

Optionally, the terminal jointly determines the feedback period of the CSI obtained by measuring the first-type reference signal and/or the feedback period of the CSI obtained by measuring the second-type reference signal in the parameter set by one or more of the following modes: the terminal acquires the feedback period of the CSI obtained by measuring the first-type reference signal and a parameter for describing a relationship between two types of feedback periods; and the terminal acquires the feedback period of the CSI obtained by measuring the second-type reference signal and the parameter for describing the relationship between the two types of feedback periods.

Optionally, the parameter for describing the relationship between the two types of feedback periods includes: information for indicating a multiple relationship between the feedback period of the CSI obtained by measuring the first-type reference signal and the feedback period of the CSI obtained by measuring the second-type reference signal or information for indicating a difference relationship between the feedback period of the CSI obtained by measuring the first-type reference signal and the feedback period of the CSI obtained by measuring the second-type reference signal.

Optionally, the parameter set includes: information for triggering the aperiodic CSI feedback.

Optionally, the parameter set corresponds to one measurement feedback process.

Optionally, according to whether there are two types of measurement configuration information, the terminal determines a time interval between a CSI reference resource time-domain location corresponding to the first-type reference signal and a time-domain location reported by CSI and/or a time interval between a CSI reference resource time-domain location corresponding to the second-type reference signal and the time-domain location reported by the CSI.

Optionally, the first-type reference signal is a non-precoded reference signal and the second-type reference signal is a precoded reference signal; or the first-type reference signal and the second-type reference signal are non-precoded reference signals having at least one of the following parameters being different: resource and port; or the first-type reference signal and the second-type reference signal are precoded reference signals having at least one of the following parameters being different: resource and port.

Optionally, the parameter set includes: information for indicating a feedback period of the CSI obtained by measuring the first-type reference signal, and/or information for indicating a feedback period of the CSI obtained by measuring the second-type reference signal.

Optionally, the parameter set includes: information for triggering the aperiodic CSI feedback.

According to another embodiment of the present invention, provided is an apparatus for configuring a reference signal. The apparatus includes: a configuration module, which is configured to configure first-type measurement configuration information and second-type measurement configuration information; and an indicating module, which is configured to use a parameter set to jointly indicate the first-type measurement configuration information and the second-type measurement configuration information to a terminal, where the first-type measurement configuration information is associated with a first-type reference signal, and the second-type measurement configuration information is associated with a second-type reference signal.

Optionally, the parameter set includes: information for indicating a period of the first-type reference signal, and/or information for indicating a period of the second-type reference signal.

Optionally, the indicating module jointly indicates the period of the first-type reference signal and/or the period of the second-type reference signal to the terminal in the parameter set by one or more of the following modes: the base station indicates the period of the first-type reference signal and a parameter for describing a relationship between periods of two types of reference signals; and the base station indicates the period of the second-type reference signal and the parameter for describing the relationship between the periods of the two types of reference signals, where the two types of reference signals are the first-type reference signal and the second-type reference signal.

According to another embodiment of the present invention, an apparatus for determining a reference signal is provided. The apparatus includes: an acquisition module, which is configured to acquire a parameter set and a measurement configuration information set, where the parameter set is configured such that a base station jointly indicates first-type measurement configuration information and second-type measurement configuration information; and a determining module, which is configured to determine the first-type measurement configuration information and the second-type measurement configuration information according to the parameter set, where the first-type measurement configuration information is associated with a first-type reference signal, and the second-type measurement configuration information is associated with a second-type reference signal.

Optionally, the parameter set includes: information for indicating a period of the first-type reference signal, and/or information for indicating a period of the second-type reference signal.

Optionally, the determining module determines the period of the first-type reference signal and/or the period of the second-type reference signal in the parameter set by one or more of the following modes: the terminal acquires the period of the first-type reference signal and a parameter for describing a relationship between periods of two types of reference signals; and the terminal acquires the period of the second-type reference signal and the parameter for describing the relationship between the periods of the two types of reference signals, where the two types of reference signals are the first-type reference signal and the second-type reference signal.

According to another embodiment of the present invention, provided is a base station. The base station includes: a configuration circuit, which is configured to configure first-type measurement configuration information and second-type measurement configuration information; and a radio frequency circuit, which is configured to use a parameter set to jointly indicate the first-type measurement configuration information and the second-type measurement configuration information to a terminal, where the first-type measurement configuration information is associated with a first-type reference signal, and the second-type measurement configuration information is associated with a second-type reference signal.

Optionally, the parameter set includes: information for indicating a period of the first-type reference signal, and/or information for indicating a period of the second-type reference signal.

According to another embodiment of the present invention, a terminal is provided. The terminal includes: a radio frequency circuit, which is configured to acquire a parameter set and a measurement configuration information set, where the parameter set is configured such that a base station jointly indicates first-type measurement configuration information and second-type measurement configuration information; and a processor, which is configured to determine the first-type measurement configuration information and the second-type measurement configuration information according to the parameter set, where the first-type measurement configuration information is associated with a first-type reference signal, and the second-type measurement configuration information is associated with a second-type reference signal.

Optionally, the parameter set includes: information for indicating a period of the first-type reference signal, and/or information for indicating a period of the second-type reference signal.

Another embodiment of the present invention provides a storage medium. The storage medium is configured to store program codes for performing the following steps:
First-type measurement configuration information and second-type measurement configuration information are configured.

A parameter set is used to jointly indicate the first-type measurement configuration information and the second-type measurement configuration information to a terminal, where the first-type measurement configuration information is associated with a first-type reference signal, and the second-type measurement configuration information is associated with a second-type reference signal.

Through embodiments of the present invention, a base station configures first-type measurement configuration information and second-type measurement configuration information; and the base station uses a parameter set to jointly indicate the first-type measurement configuration information and the second-type measurement configuration information to a terminal, where the first-type measurement configuration information is associated with a first-type reference signal, and the second-type measurement configuration information is associated with a second-type reference signal. Two types of channel state information reference signals: the first-type reference signal and the second-type reference signal are jointly configured so that a receiving end associates the two types of reference signals when receiving channel state information reference signals, thereby solving the problem where the accuracy of channel measurement and channel information feedback is low in the existing art.

### BRIEF DESCRIPTION OF DRAWINGS

The drawings described herein are used to provide a further understanding of the present invention, and form a part of the present application. The exemplary embodiments and descriptions thereof in the present invention are used to explain the present invention and do not limit the present invention in an improper way. In the drawings:
FIG. 1 is a flowchart of a method for configuring a reference signal according to embodiments of the present invention;
FIG. 2 is a flowchart of a method for determining a reference signal according to embodiments of the present invention;
FIG. 3 is a block diagram of an apparatus for configuring a reference signal according to embodiments of the present invention;
FIG. 4 is a block diagram of an apparatus for determining a reference signal according to embodiments of the present invention;
FIG. 5 is a schematic diagram of transmitting a precoded reference signal according to embodiments of the present invention; and
FIG. 6 is a schematic diagram of hybrid precoding according to embodiments of the present invention.

### DETAILED DESCRIPTION

The present invention will be detailed below with reference to the accompanying drawings in conjunction with the embodiments. If not in collision, the embodiments described herein and the features thereof can be combined with each other.

It is to be noted that the terms "first", "second" and the like in the description, claims and drawings of the present invention are used to distinguish between similar objects and are not necessarily used to describe a particular order or sequence.

### Embodiment one:

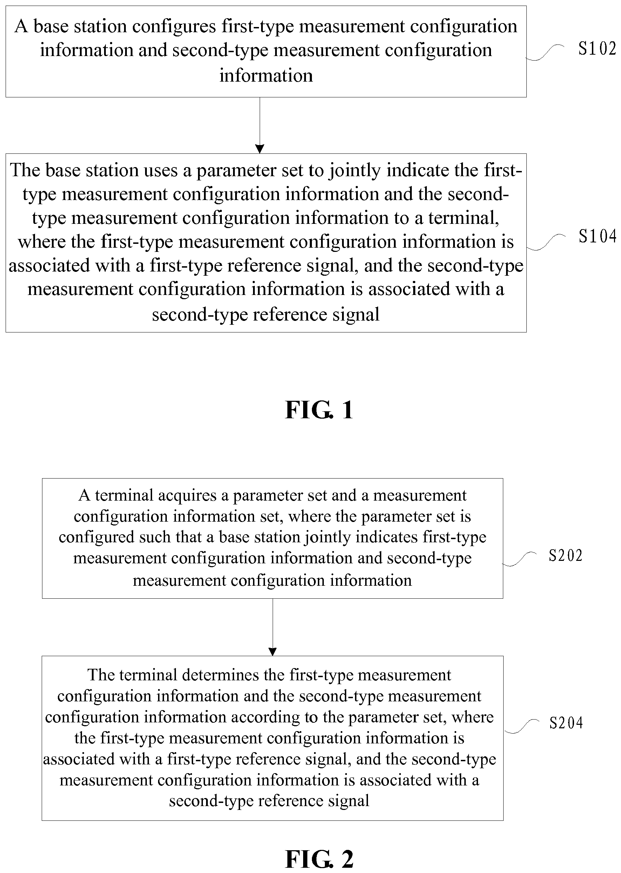

This embodiment provides a method for configuring a reference signal. FIG. 1 is a flowchart of a method for configuring a reference signal according to embodiments of the present invention. As shown in FIG. 1, the method includes the steps described below.

In step S102, a base station configures first-type measurement configuration information and second-type measurement configuration information.

In step S104, the base station jointly indicates the first-type measurement configuration information and the second-type measurement configuration information to a terminal based on a parameter set, where the first-type measurement configuration information is associated with a first-type reference signal, and the second-type measurement configuration information is associated with a second-type reference signal.

Through the preceding steps, a base station configures first-type measurement configuration information and second-type measurement configuration information; and the base station uses a parameter set to jointly indicate the first-type measurement configuration information and the second-type measurement configuration information to a terminal, where the first-type measurement configuration information is associated with a first-type reference signal, and the second-type measurement configuration information is associated with a second-type reference signal. Two types of channel state information reference signals: the first-type reference signal and the second-type reference signal are jointly configured so that a receiving end associates the two types of reference signals when receiving channel state information reference signals, thereby solving the problem where the accuracy of channel measurement and channel information feedback is low in the related art.

The first-type reference signal is a non-precoded reference signal and the second-type reference signal is a precoded reference signal; or the first-type reference signal is a precoded reference signal and the second-type reference signal is a non-precoded reference signal; or the first-type reference signal and the second-type reference signal are non-precoded reference signals having at least one of the following parameters being different: resource and port; or the first-type reference signal and the second-type reference signal are precoded reference signals having at least one of the following parameters being different: resource and port.

Optionally, the first-type measurement configuration information is configuration information of the first-type reference signal, and the second-type measurement configuration information is configuration information of the second-type reference signal.

Optionally, the parameter set includes: information for indicating a period of the first-type reference signal, and/or information for indicating a period of the second-type reference signal.

Optionally, the period of the first-type reference signal is not less than T1 subframes, and T1 is a positive integer greater than zero.

Optionally, the base station determines a value of the T1 by one or more of the following pieces of information:
Information one: information about terminal capability classification;
Information two: information about a maximum number of reference signal resources processable by the terminal;
Information three: information about a maximum number of reference signal ports processable by the terminal.

Optionally, the period of the first-type reference signal is greater than the period of the second-type reference signal; the base station jointly indicates the period of the first-type reference signal and/or the period of the second-type reference signal to the terminal in the parameter set by one or more of the following modes:
Mode one: the base station indicates the period of the first-type reference signal and a parameter for describing a relationship between periods of two types of reference signals;
Mode two: the base station indicates the period of the second-type reference signal and the parameter for describing the relationship between the periods of the two types of reference signals.

Optionally, the parameter for describing the relationship between the periods of the two types of reference signals includes: information for indicating a multiple relationship between the period of the first-type reference signal and the period of the second-type reference signal or information for indicating a difference relationship between the period of the first-type reference signal and the period of the second-type reference signal.

Optionally, the parameter set includes information for indicating power of the first-type reference signal on each resource unit and power of the second-type reference signal on each resource unit; the power of the first-type reference signal on the resource unit is greater than the power of the second-type reference signal on the resource unit; the base station jointly indicates the power of the first-type reference signal and/or the power of the second-type reference signal in the parameter set by one or more of the following modes:
Mode one: the base station indicates the power of the first-type reference signal on each resource unit and a parameter for describing a relationship between power of two types of reference signals;
Mode two: the base station indicates the power of the second-type reference signal on the each resource unit and the parameter for describing the relationship between the power of the two types of reference signals.

Optionally, the parameter for describing the relationship between the power of the two types of reference signals includes: information for indicating a multiple relationship between the power of the first-type reference signal and the power of the second-type reference signal on the each resource unit or information for indicating a difference relationship between the power of the first-type reference signal and the power of the second-type reference signal on the each resource unit.

Optionally, the parameter set includes: information for indicating codebook subset restriction of the first-type reference signal, where the codebook subset restriction is not enabled for the second-type reference signal.

Optionally, the first-type measurement configuration information is configuration information of a first-type interference measurement resource associated with the first-type reference signal, and the second-type measurement configuration information is configuration information of a second-type interference measurement resource associated with the second-type reference signal.

Optionally, the parameter set includes: information for jointly indicating interference measurement restriction; a same interference measurement restriction state is configured for the first-type interference measurement resource and the second-type interference measurement resource.

Optionally, the parameter set includes: information for indicating a period of the first-type interference measurement resource, and/or information for indicating a period of the second-type interference measurement resource.

Optionally, the period of the first-type interference measurement resource is not less than T2 subframes, and T2 is a positive integer greater than 0.

Optionally, the base station determines a value of the T2 by one or more of the following pieces of information:
Information one: information about terminal capability classification;
Information two: information about a maximum number of reference signal resources processable by the terminal;
Information three: information about a maximum number of reference signal ports processable by the terminal.

Optionally, the period of the first-type interference measurement resource is greater than the period of the second-type interference measurement resource.

Optionally, the base station jointly indicates the period of the first-type interference measurement resource and/or the period of the second-type interference measurement resource to the terminal in the parameter set by one or more of the following modes:
Mode one: the base station indicates the period of the first-type interference measurement resource and a parameter for describing a relationship between periods of two types of interference measurement resources;
Mode two: the base station indicates the period of the second-type interference measurement resource and the parameter for describing the relationship between the periods of the two types of interference measurement resources.

Optionally, the parameter for describing the relationship between the periods of the two types of interference measurement resources includes: information for indicating a multiple relationship between the period of the first-type interference measurement resource and the period of the second-type interference measurement resource or information for indicating a difference relationship between the period of the first-type interference measurement resource and the period of the second-type interference measurement resource.

Optionally, the first-type measurement configuration information is feedback configuration information of CSI obtained by measuring the first-type reference signal, and the second-type measurement configuration information is feedback configuration information of CSI obtained by measuring the second-type reference signal.

Optionally, the feedback configuration information is feedback mode information, which can be configured as at least one of the following: a feedback mode of the CSI obtained based on the first-type reference signal is a periodic feedback, and a feedback mode of the CSI obtained based on the second-type reference signal is the periodic feedback; the feedback mode of the CSI obtained based on the first-type reference signal is the periodic feedback, and the feedback mode of the CSI obtained based on the second-type reference signal is an aperiodic feedback; the feedback mode of the CSI obtained based on the first-type reference signal is the aperiodic feedback, and the feedback mode of the CSI obtained based on the second-type reference signal is the periodic feedback.

Optionally, the parameter set includes: information for indicating a feedback period of the CSI obtained by measuring the first-type reference signal, and/or information for indicating a feedback period of the CSI obtained by measuring the second-type reference signal.

Optionally, the CSI obtained by measuring the first-type reference signal is not less than T3 subframes, and the T3 is a positive integer greater than zero.

Optionally, the base station determines a value of the T3 by one or more of the following pieces of information:
Information one: information about terminal capability classification;
Information two: information about a maximum number of reference signal resources processable by the terminal;
Information three: information about a maximum number of reference signal ports processable by the terminal.

Optionally, the feedback period of the CSI obtained by measuring the first-type reference signal is greater than the feedback period of the CSI obtained by measuring the second-type reference signal; the base station jointly indicates the feedback period of the CSI obtained by measuring the first-type reference signal and/or the feedback period of the CSI obtained by measuring the second-type reference signal to the terminal in the parameter set by one or more of the following modes:
Mode one: the base station indicates the feedback period of the CSI obtained by measuring the first-type reference signal and a parameter for describing a relationship between two types of feedback periods;
Mode two: the base station indicates the feedback period of the CSI obtained by measuring the second-type reference signal and the parameter for describing the relationship between the two types of feedback periods.

Optionally, the parameter for describing the relationship between the two types of feedback periods includes: information for indicating a multiple relationship between the feedback period of the CSI obtained by measuring the first-type reference signal and the feedback period of the CSI obtained by measuring the second-type reference signal or information for indicating a difference relationship between the feedback period of the CSI obtained by measuring the first-type reference signal and the feedback period of the CSI obtained by measuring the second-type reference signal.

Optionally, the parameter set includes: information for triggering the aperiodic CSI feedback. Optionally, the parameter set may further include: information for triggering the aperiodic CSI feedback.

Optionally, the parameter set is defined within a measurement feedback process.

This embodiment provides a method for determining a reference signal. FIG. 2 is a flowchart of a method for determining a reference signal according to embodiments of the present invention. As shown in FIG. 2, the method includes the steps described below.

In step S202, a terminal acquires a parameter set and a measurement configuration information set, where the parameter set is configured such that a base station jointly indicates first-type measurement configuration information and second-type measurement configuration information.

In step S204, the terminal determines the first-type measurement configuration information and the second-type measurement configuration information according to the parameter set, where the first-type measurement configuration information corresponds to a non-precoded channel state information reference signal (CSI-RS) and the second-type measurement configuration information corresponds to a precoded CSI-RS.

Optionally, the first-type measurement configuration information is configuration information of the first-type reference signal, and the second-type measurement configuration information is configuration information of the second-type reference signal.

Optionally, the parameter set includes: information for indicating a period of the first-type reference signal, and/or information for indicating a period of the second-type reference signal.

Optionally, the period of the first-type reference signal is not less than T1 subframes, and T1 is a positive integer greater than zero. The terminal determines a value of the T1 by reporting one or more of the following pieces of information:
Information one: information about terminal capability classification;
Information two: information about a maximum number of reference signal resources processable by the terminal;
Information three: information about a maximum number of reference signal ports processable by the terminal.

Optionally, the period of the first-type reference signal is greater than the period of the second-type reference signal. The terminal determines the period of the first-type reference signal and/or the period of the second-type reference signal in the parameter set by one or more of the following modes:
Mode one: the terminal acquires the period of the first-type reference signal and a parameter for describing a relationship between periods of two types of reference signals;
Mode two: the terminal acquires the period of the second-type reference signal and the parameter for describing the relationship between the periods of the two types of reference signals.

Optionally, the parameter for describing the relationship between the periods of the two types of reference signals includes: information for indicating a multiple relationship between the period of the first-type reference signal and the period of the second-type reference signal or information for indicating a difference relationship between the period of the first-type reference signal and the period of the second-type reference signal.

Optionally, the parameter set includes: information for indicating power of the first-type reference signal on each resource unit and power of the second-type reference signal on each resource unit.

Optionally, the power of the first-type reference signal is greater than the power of the second-type reference signal. The terminal jointly determines the power of the first-type reference signal and/or the power of the second-type reference signal in the parameter set by one or more of the following modes:
Mode one: the terminal acquires the power of the first-type reference signal on each resource unit and a parameter for describing a relationship between power of two types of reference signals;
Mode two: the terminal acquires the power of the second-type reference signal on each resource unit and the parameter for describing the relationship between the power of the two types of reference signals.

Optionally, the parameter for describing the relationship between the power of the two types of reference signals includes: information for indicating a multiple relationship between the power of the first-type reference signal and the power of the second-type reference signal on the each resource unit or information for indicating a difference relationship between the power of the first-type reference signal and the power of the second-type reference signal on the each resource unit. Optionally, the parameter set includes: information for indicating codebook subset restriction of the first-type reference signal, where the codebook subset restriction is not enabled for the second-type reference signal.

Optionally, the first-type measurement configuration information is configuration information of a first-type interference measurement resource, and the second-type measurement configuration information is configuration information of a second-type interference measurement resource; the parameter set includes: information for jointly indicating interference measurement restriction; the first-type interference measurement resource and the second-type interference measurement resource have a same interference measurement restriction state.

Optionally, the parameter set includes: information for indicating a period of the first-type interference measurement resource, and/or information for indicating a period of the second-type interference measurement resource.

Optionally, the period of the first-type interference measurement resource is not less than T2 subframes, and T2 is a positive integer greater than 0; the terminal determines a value of the T2 by reporting one or more of the following pieces of information:
Information one: information about terminal capability classification;
Information two: information about a maximum number of reference signal resources processable by the terminal;
Information three: information about a maximum number of reference signal ports processable by the terminal.

Optionally, the period of the first-type interference measurement resource is greater than the period of the second-type interference measurement resource; the terminal jointly determines the period of the first-type interference measurement resource and/or the period of the second-type interference measurement resource in the parameter set by one or more of the following modes:
Mode one: the terminal acquires the period of the first-type interference measurement resource and a parameter for describing a relationship between periods of two types of interference measurement resources;
Mode two: the terminal acquires the period of the second-type interference measurement resource and the parameter for describing the relationship between the periods of the two types of interference measurement resources.

Optionally, the parameter for describing the relationship between the periods of the two types of interference measurement resources includes: information for indicating a multiple relationship between the period of the first-type interference measurement resource and the period of the second-type interference measurement resource or information for indicating a difference relationship between the period of the first-type interference measurement resource and the period of the second-type interference measurement resource.

Optionally, the first-type measurement configuration information is feedback configuration information of CSI obtained by measuring the first-type reference signal, and the second-type measurement configuration information is feedback configuration information of CSI obtained by measuring the second-type reference signal; the parameter set includes: information for indicating a feedback period of the CSI obtained by measuring the first-type reference signal, and/or information for indicating a feedback period of the CSI obtained by measuring the second-type reference signal.

Optionally, information for indicating a feedback period of the CSI obtained by measuring the first-type reference signal, information for indicating a feedback period of the CSI obtained by measuring the second-type reference signal, and information for triggering the aperiodic CSI feedback.

Optionally, the feedback period of CSI obtained by measuring the first-type reference signal is not less than T3 subframes, and the T3 is a positive integer greater than zero; the terminal determines a value of the T3 by reporting one or more of the following pieces of information:
Information one: information about terminal capability classification;
Information two: information about a maximum number of reference signal resources processable by the terminal;
Information three: information about a maximum number of reference signal ports processable by the terminal.

Optionally, the feedback period of the CSI obtained by measuring the first-type reference signal is greater than the feedback period of the CSI obtained by measuring the second-type reference signal; the terminal jointly determines the feedback period of the CSI obtained by measuring the first-type reference signal and/or the feedback period of the CSI obtained by measuring the second-type reference signal in the parameter set by one or more of the following modes:
Mode one: the terminal acquires the feedback period of the CSI obtained by measuring the first-type reference signal and a parameter for describing a relationship between two types of feedback periods;
Mode two: the terminal acquires the feedback period of the CSI obtained by measuring the second-type reference signal and the parameter for describing the relationship between the two types of feedback periods.

Optionally, the parameter for describing the relationship between the two types of feedback periods includes: information for indicating a multiple relationship between the feedback period of the CSI obtained by measuring the first-type reference signal and the feedback period of the CSI obtained by measuring the second-type reference signal or information for indicating a difference relationship between the feedback period of the CSI obtained by measuring the first-type reference signal and the feedback period of the CSI obtained by measuring the second-type reference signal.

Optionally, the parameter set is defined within a measurement feedback process.

Optionally, according to whether there are two types of measurement configuration information, the terminal determines a time interval between a time-domain location of a CSI reference resource corresponding to the first-type reference signal and a time-domain location reported by CSI and/or a time interval between a time-domain location of a CSI reference resource corresponding to the second-type reference signal and the time-domain location reported by the CSI.

From the description of the embodiment described above, it will be apparent to those skilled in the art that the method of the embodiment described above may be implemented by use of software plus a necessary general-purpose hardware platform, or may of course be implemented by hardware, but in many cases, the former is a preferred implementation. Based on this understanding, the solution provided by the present invention substantially, or the part contributing to the existing art, may be embodied in the form of a software product. The software product is stored on a storage medium (such as a ROM/RAM, a magnetic disk or an optical disk) and includes several instructions for enabling a terminal device (which may be a mobile phone, a computer, a server or a network device) to execute the method according to each embodiment of the present invention.

### Embodiment two:

This embodiment further provides an apparatus for configuring a reference signal, a base station, a terminal, and an apparatus for determining a reference signal. What has been described will not be repeated. As used below, the term "module" may be software, hardware or a combination thereof capable of implementing preset functions. The apparatus in the embodiment described below is preferably implemented by software, but implementation by hardware or by a combination of software and hardware is also possible and conceived.

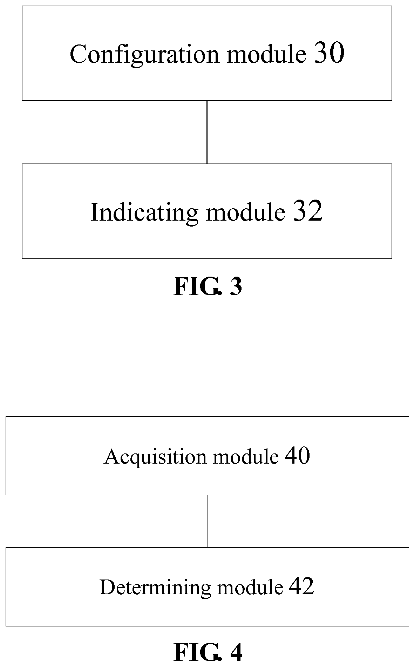

FIG. 3 is a block diagram of an apparatus for configuring a reference signal according to embodiments of the present invention. As shown in FIG. 3, the apparatus includes a configuration module 30 and an indicating module 32.

The configuration module 30 is configured to configure first-type measurement configuration information and second-type measurement configuration information.

The indicating module 32 is configured to use a parameter set to jointly indicate the first-type measurement configuration information and the second-type measurement configuration information to a terminal, where the first-type measurement configuration information is associated with a first-type reference signal, and the second-type measurement configuration information is associated with a second-type reference signal.

Optionally, the parameter set includes: information for indicating a period of the first-type reference signal, and/or information for indicating a period of the second-type reference signal.

Optionally, the indicating module jointly indicates the period of the first-type reference signal and/or the period of the second-type reference signal to the terminal in the parameter set by one or more of the following modes: the base station indicates the period of the first-type reference signal and a parameter for describing a relationship between periods of two types of reference signals; and the base station indicates the period of the second-type reference signal and the parameter for describing the relationship between the periods of the two types of reference signals, where the two types of reference signals are the first-type reference signal and the second-type reference signal.

FIG. 4 is a block diagram of an apparatus for determining a reference signal according to embodiments of the present invention. As shown in FIG. 4, the apparatus includes an acquisition module 40 and a determining module 42.

The acquisition module 40 is configured to acquire a parameter set and a measurement configuration information set, where the parameter set is configured such that a base station jointly indicates first-type measurement configuration information and second-type measurement configuration information.

The determining module 42 is configured to determine the first-type measurement configuration information and the second-type measurement configuration information according to the parameter set, where the first-type measurement configuration information is associated with a first-type reference signal, and the second-type measurement configuration information is associated with a second-type reference signal.

Optionally, the parameter set includes: information for indicating a period of the first-type reference signal, and/or information for indicating a period of the second-type reference signal.

Optionally, the determining module determines the period of the first-type reference signal and/or the period of the second-type reference signal in the parameter set by one or more of the following: the terminal acquires the period of the first-type reference signal and a parameter for describing a relationship between periods of two types of reference signals; and the terminal acquires the period of the second-type reference signal and the parameter for describing the relationship between the periods of the two types of reference signals, where the two types of reference signals are the first-type reference signal and the second-type reference signal.

This embodiment further provides a base station. The base station includes: a configuration circuit, which is configured to configure first-type measurement configuration information and second-type measurement configuration information; and a radio frequency circuit, which is configured to use a parameter set to jointly indicate the first-type measurement configuration information and the second-type measurement configuration information to a terminal, where the first-type measurement configuration information is associated with a first-type reference signal, and the second-type measurement configuration information is associated with a second-type reference signal.

Optionally, the parameter set includes: information for indicating a period of the first-type reference signal, and/or information for indicating a period of the second-type reference signal.

This embodiment further provides a terminal. The terminal includes: a radio frequency circuit, which is configured to acquire a parameter set and a measurement configuration information set, where the parameter set is configured such that a base station jointly indicates first-type measurement configuration information and second-type measurement configuration information; and a processor, which is configured to determine the first-type measurement configuration information and the second-type measurement configuration information according to the parameter set, where the first-type measurement configuration information is associated with a first-type reference signal, and the second-type measurement configuration information is associated with a second-type reference signal.

Optionally, the parameter set includes: information for indicating a period of the first-type reference signal, and/or information for indicating a period of the second-type reference signal.

It is to be noted that the various modules described above may be implemented by software or hardware. Implementation by hardware may, but may not necessarily, be performed by the following method: the various modules described above are located in a same processor; or, in any combination, the various modules are located in different processors.

### Embodiment three:

This embodiment includes multiple sub-embodiments for illustrating this application in detail in conjunction with scenarios.

### Sub-embodiment A:

This embodiment provides a specific implementation of reference signal configuration and channel information feedback. A base station configures precoded reference signal resources and non-precoded reference signal resources in two or one CSI process, and each set of reference signal resources include:
CSI-RS port;
CSI-RS time-frequency resource;
CSI-RS subframe configuration;
CSI-RS power;
CSI-RS sequence ID generation parameter;
CDM type parameter;
QCL parameter.

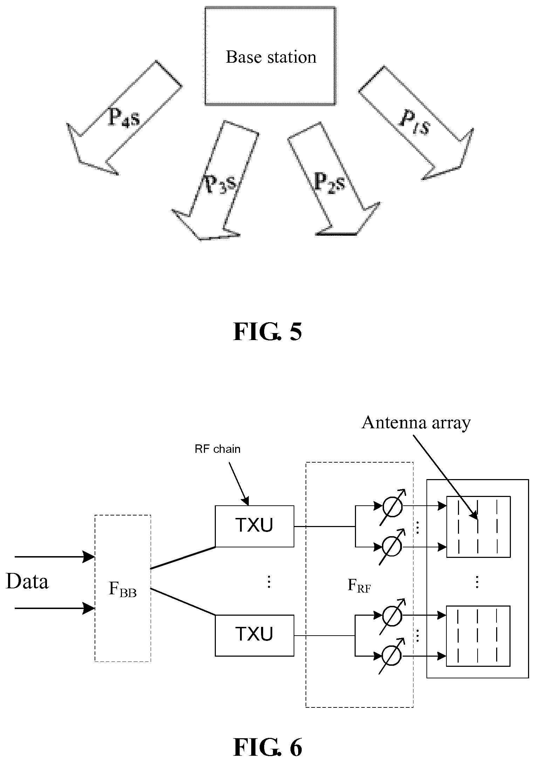

The non-precoded pilot resources are configured with Q antenna ports and feed back M-dimensional CSI. The precoded pilot resources include one set of CSI-RS resources, and the Q antenna ports are virtualized on the kth CSI-RS port by using the precoding matrix Pk, that is, Pk is a matrix of Q rows and Nk columns. FIG. 5 is a schematic diagram of transmitting a precoded reference signal according to embodiments of the present invention. As shown in FIG. 5, the base station loads and transmits the CSI-RS sequence s on K precoding matrices P1, ..., PK through non-precoded reference signal resources, that is, precoded reference signal sequences P1s, ..., PKs are actually transmitted on each CSI-RS port. The way in which the base station acquires P1, ..., PK is based on feedback of non-precoded pilots. The specific method is: the terminal measures the pilot on the non-precoded CSI-RS resource, and feeds back the CSI according to the measurement result, where the CSI includes the first precoding indication information PMI-1, and the PMI-1 indicates a set of precodings, indicating Broadband/long-term precoding information, and the channel information actually measured by the terminal is included in a set of precodings indicated by PMI-1. After acquiring the PMI-1 information, the base station applies a set of precodings indicated by the PMI-1 information to P1, ..., PK. This process can be referred to as hybrid CSI-RS, and the final CSI information is obtained through two-step pilots. For example, the base station is configured with a 32-dimensional antenna port, the 32-port non-precoded pilot can be configured by using the hybrid CSI-RS, the 8 precoding matrices indicated by the PMI-1 are obtained through the feedback of LTE Rel-13 codebook, 8-port precoded pilot resources with K=1 are configured, and the traditional 8-antenna codebook or the Rel-13 new codebook is used to feed back the final RI, PMI and CQI information.

In the preceding hybrid CSI-RS case, the dimension of the non-precoded CSI-RS of the Q port is usually larger than the dimension of the precoded CSI-RS port of the K port. Therefore, compared with a traditional system that includes merely Q-port non-precoded CSI-RS, high pilot overheads may be incurred. However, if the period of the non-precoded CSI-RS is optimized, a larger non-precoded CSI-RS period can be set so as to reduce pilot overheads greatly in the case of a small performance loss, thereby gaining a larger transmission efficiency. A simple approach is to set a minimum non-precoded CSI-RS period, for example, T1. In an actual system, the minimum non-precoded CSI-RS period may be 50 ms, 100 ms, and so on. In this way, the base station transmits the non-precoded CSI-RS once in a long period of time, and in most cases, transmits the precoded CSI-RS with a smaller dimension. The optimized design of the period can be used to reduce pilot overheads greatly in the case of a small performance loss. On the other hand, the configuration of the CSI-RS period will have a greater impact on the complexity of the terminal design. When the CSI-RS period is configured to be larger, the terminal does not need to measure, store and report CSI frequently; therefore, the complexity is lower. When the CSI-RS period is configured to be smaller, the terminal needs to frequently measure, store and report CSI; therefore, the complexity is higher. Therefore, the lower limit T1 of the non-precoded CSI-RS period can also be determined by the terminal capability. The base station can obtain the lower limit T1 of the non-precoded CSI-RS period configurable for the terminal, by using the terminal capability classification information obtained during the access. In addition, in the current LTE system, the terminal capability can be determined by the maximum number of CSI-RS resources or the maximum number of CSI-RS ports that the terminal can measure. Therefore, the base station can also determine the value of T1 by the maximum number of CSI-RS resources or the maximum number of CSI-RS ports that the terminal can process. Specifically, the larger the maximum number of CSI-RSs or the maximum number of CSI-RS ports that the terminal can process, the smaller the lower limit T1 of the non-precoded CSI-RS period that can be configured for the terminal. In this way, a balance can be achieved between terminal complexity, pilot overheads and CSI acquisition performance to optimize the overall efficiency of the system.

In addition to limiting the lower period limit of the non-precoded reference signal, another method is to jointly optimize the periods of the non-precoded and precoded CSI-RSs. In general, non-precoded CSI-RSs occupy more CSI-RS resources while precoded CSI-RSs occupy fewer CSI-RS resources. Therefore, when pilot overheads are taken into account, the period of the non-precoded CSI-RS should be configured to be greater than the period of the precoded CSI-RS. In a specific configuration, a method in which the signaling efficiency is higher is to use a set of signaling to indicate the periods of two types of CSI-RSs. For example, the values of the predefined periods of two types of CSI-RSs and one type of CSI-RSs therein are used to indicate the periods of two types of CSI-RSs. One method is to define the period of the non-precoded CSI-RS to be N times the period of the precoded CSI-RS. N is greater than or equal to 1. The specific value of N can be dynamically or semi-statically adjusted by the base station according to actual conditions. For example, N = 5 or N = 8. For a scenario where the channel changes rapidly, a smaller N can be set. For a scenario where the channel changes relatively smoothly, a larger N can be set. Another method is to predefine the period of the non-precoded CSI-RS to have T more subframes than the period of the precoded CSI-RS. That is, the base station notifies the period of the non-precoded CSI-RS or the period of the precoded CSI-RS, and the offset value T between the two types of periods. The specific value of T can be dynamically or semi-statically adjusted by the base station according to actual conditions. For example, T = 50 or T = 80. For a scenario where the channel changes rapidly, a smaller T can be set. For a scenario where the channel changes relatively smoothly, a larger T can be set. In fact, the CSI obtained by the non-precoded pilot is long-term broadband information, and the CSI obtained by the precoded pilot is short-term information. Therefore, the system is more dependent on the short-term CSI, so even if the period of the non-precoded CSI-RS is greater than the period of the precoded CSI-RS, the impact on overall performance is not great, but the pilot overheads can be greatly reduced. Therefore, the base station can optimize the configuration of N and T to achieve lower pilot overheads and ensure better transmission performance.

### Sub-embodiment B:

This embodiment provides a specific implementation on signaling configuration of CSI-RS For a network configured with two types of CSI-RSs, specific configuration information of the two types of CSI-RSs of the terminal needs to be indicated through signaling. In the related art, the network separately configures precoded and non-precoded CSI-RSs through independent parameter sets. In fact, to achieve superior overhead and performance, there is a certain relationship between the two types of CSI-RSs, for example, the periodic relationship of the optimized configuration described in embodiment A. Therefore, jointly configuring the two parts of information can achieve the effect of improving signaling efficiency. The joint configuration of the periodic parameters has been given in embodiment A. Here some specific configurations of other parameters are provided.

The first is reference signal configuration information. In addition to the period, the CSI-RS transmission power is also a parameter that can be jointly optimized. In the existing system, the CSI-RS transmission power is represented by the transmission power of the CSI-RS on each resource. In the actual transmission of the reference signal, since the precoded CSI-RS has a precoding gain or a beamforming gain compared to the non-precoded CSI-RS, the non-precoded pilot needs larger transmission power to achieve the same coverage. Therefore, it is feasible to achieve the limit where the transmission power of the non-precoded pilot is larger through joint configuration of CSI-RS transmission power. A more effective method is to jointly configure the two transmission power through the transmission power of the non-precoded or precoded pilot and the parameter reflecting the relationship between the two. For example, the signaling includes non-precoded CSI-RS transmission power, and the power ratio p of the non-precoded CSI-RS to the precoded CSI-RS; the base station can semi-statically or dynamically configure the value of p according to changes of a scenario or a channel. In addition, it is also feasible to jointly configure the two transmission power by configuring non-precoded CSI-RS transmission power, and the power offset value between the precoded CSI-RS and the non-precoded CSI-RS, that is, the power difference between the precoded CSI-RS and the non-precoded CSI-RS. In addition to the transmission power, another reference signal parameter that can be jointly configured is codebook subset selection. In fact, the PMI-1 fed back by the non-precoded CSI-RS determines the final beam range, so it is feasible to perform codebook subset restriction of only non-precoded CSI-RS to effectively limit the beam range so as to reduce neighbor interference. Therefore, it is feasible to jointly configure the two types of reference signals by applying codebook subset restriction to the non-precoded pilot and by not enabling the precoded pilot.

In addition, for the configuration information of interference measurement resources, joint configuration can also be performed. In fact, for interference measurement, each interference measurement resource is associated with each reference signal resource, so the restriction and optimization applied to the configuration of reference signal resources can all be applied to interference measurement resources. Specifically, this includes that the period of the interference measurement resource of the non-precoded CSI-RS has a lower limit, the period of the interference measurement resource of the non-precoded CSI-RS is greater than the period of the interference measurement resource of the precoded CSI-RS, joint configuration is performed through the ratio or difference between the period of the interference measurement resource of the non-precoded CSI-RS and the period of the interference measurement resource of the precoded CSI-RS, and so on. In addition, the interference is the same regardless of the precoded CSI-RS or the non-precoded CSI-RS, so for the interference measurement restriction, it is feasible to perform joint configuration by configuring the same interference measurement restriction for the precoded CSI-RS or the non-precoded CSI-RS.

Joint configuration can also be performed for feedback configuration of CSI obtained by measuring the two types of reference signals, so that feedback overheads are optimized. The core of feedback optimization configuration for the CSI is firstly the configuration of the feedback mode. Since the aperiodic feedback adopts a triggering method, feedback overheads can be saved by way of feedback on demand. Therefore, it is feasible to configure the same or different feedback modes for the two types of CSI-RSs configured for the terminal to achieve a balance between performance and overheads. For example, the periodic feedback through PUCCH is configured for both types of CSI-RSs; or the periodic feedback through PUCCH is configured for one type of CSI-RSs and the aperiodic feedback through PUSCH as needed is configured for another type of CSI-RSs. For the aperiodic feedback, the terminal needs to be dynamically instructed by the signaling to trigger the feedback. Further, for the periodic feedback, it is feasible to optimize configuration of the feedback periods of the two types of CSI. In fact, since the periods of the non-precoded CSI-RS and the precoded CSI-RS are limited, the periods of the two types of CSI should also be limited accordingly. Specifically, optimized configuration includes that the CSI feedback period of the non-precoded CSI-RS has a lower limit, the CSI feedback period of the non-precoded CSI-RS is greater than the CSI feedback period of the precoded CSI-RS, joint configuration is performed through the ratio or difference between the CSI feedback period of the non-precoded CSI-RS and the CSI feedback period of the precoded CSI-RS, and so on. In addition, for a terminal configured with two types of CSI-RSs, simultaneous measurement may result in a large terminal complexity. Therefore, if the two types of CSI are configured in the same CSI process, the time limit for the terminal to calculate CSI needs to be lowered. In the related art, if the terminal reports CSI in subframe n, the CSI reference resource is located in subframe n-4; if two types of CSI-RSs are configured in one CSI process, it is feasible to broaden the CSI reference resource location to n-5 or earlier so as to reduce the complexity of terminal processing.

### Sub-embodiment C:

This embodiment provides a CSI-RS configuration mode. In a high-frequency communication system, hybrid beamforming needs to be performed through analog beamforming plus digital beamforming. FIG. 6 is a schematic diagram of hybrid precoding according to embodiments of the present invention. As shown in FIG. 6, a high-frequency antenna array including MN antenna elements can be divided into M RF chains, and each RF chain includes N antenna elements. The N antenna elements in each RF chain implement analog beamforming on the RF side by phase modulation, and the M RF chains implement digital beamforming in the baseband by baseband precoding. When acquiring the weight sequence of the analog beamforming, the base station loads different analog beamforming weights (beams) on different time-frequency resources, and correspondingly performs measurement and feedback on the terminal. This phase may be called beam training. After acquiring beam information fed back by the terminal, the base station performs pilot transmission on each beam, and configures the terminal to feed back the baseband precoding weight. This process can be achieved by a hybrid CSI-RS scheme using Class B K > 1 and Class B K = 1. The base station acquires baseband CSI by using precoded pilot configuration of Class B K > 1 in the beam training phase and using Class B K > 1 or Class B K = 1 in the baseband precoding acquisition phase. In general, the beam training phase requires high training overheads, that is, more time-frequency resources are used for beam training. Therefore, when the terminal is stationary, the pilot transmission period of the first step can be configured to be large, for example, not less than a threshold T1. In addition, joint configuration of reference signal periods can be used to improve signaling efficiency. This includes that the period of CSI-RS reference signal with K > 1 is greater than the period of CSI-RS reference signal with K = 1, and joint configuration is performed through the ratio or difference between the reference signal period of CSI-RS with K > 1 and the reference signal period of CSI-RS with K = 1. In this way, through two-step CSI acquisition, lower overheads and better transmission performance can be achieved. Similarly, other resource configuration information can also be configured by means of joint indication, including interference measurement period and interference measurement restriction, CSI feedback period, and the like. Specifically, for interference measurement, this includes that the period of the CSI-RS interference measurement resource with the K > 1 has a lower limit, the period of the CSI-RS interference measurement resource with K > 1 is greater than the period of the CSI-RS interference measurement resource with K = 1, and joint configuration is performed through the ratio or difference between the period of the CSI-RS interference measurement resource with K > 1 and the period of the CSI-RS interference measurement resource with K = 1; for CSI feedback, this includes that the CSI feedback period of CSI-RS with K > 1 has a lower limit, the CSI feedback period of CSI-RS with K > 1 is greater than the CSI feedback period of CSI-RS with K = 1, and joint configuration is performed through the ratio or difference between the CSI feedback period of CSI-RS with K > 1 and the CSI feedback period of CSI-RS with K = 1.

### Sub-embodiment D:

This embodiment provides a specific implementation of reference signal configuration. In the embodiments A to C, attention is paid to the configuration of downlink reference signals. In fact, the method in the present invention can also be applied to uplink reference signals. It is also necessary to configure multiple antennas on existing or future terminals. Therefore, uplink channel estimation will also become an important issue. The main functions are as follows: 1. estimate the uplink channel and then use reciprocity to obtain downlink channel information; 2. estimate the uplink channel and then enhance uplink multi-antenna performance through feedback, for example, operating the terminal to transmit beamforming. The configuration method of uplink reference signals is as follows: the network configures uplink reference signal information, and the terminal transmits uplink reference signals according to the received configuration information. For point 2, the existing uplink reference signal configuration does not meet the requirements. To meet the requirements of uplink transmission for CSI acquisition, it is also feasible to perform hybrid configuration of a precoded uplink reference signal and a non-precoded uplink reference signal. The non-precoded uplink reference signal is used to obtain the precoding used by the precoded uplink reference signal, and the precoded uplink reference signal is used to enhance the uplink transmission performance. The uplink system is a power-limited scenario, so the use of the precoded reference signal in the uplink can significantly enhance the performance of the uplink by precoding gains or beamforming gains. When the precoded and non-precoded reference signals are mixed in the uplink system, the joint configuration can improve the signaling efficiency and achieve the optimal configuration. For example, it is feasible to perform joint configuration for the period of the precoded uplink reference signal and the period of the non-precoded uplink reference signal. This includes that the period of the non-precoded uplink reference signal is greater than a certain lower limit, the periods are jointly configured through the ratio or difference between the period of the non-precoded uplink reference signal and the period of the precoded uplink reference signal, and the reference signal transmission power is jointly configured through the ratio or difference between the power of the non-precoded uplink reference signal and the power of the precoded uplink reference signal. In this way, through optimized configuration of the preceding ratio or difference, the pilot and power overheads can be reduced, and the transmission and CSI performance may be better. The resources in the uplink system are more limited than those in the downlink system, so it is more significant to reduce power and pilot overheads in the uplink system.

### Embodiment four:

Embodiments of the present invention further provide a storage medium. Optionally, in this embodiment, the storage medium may be configured to store program codes for executing the steps described below.

In S1, first-type measurement configuration information and second-type measurement configuration information are configured.

In S2, a parameter set is used to jointly indicate the first-type measurement configuration information and the second-type measurement configuration information to a terminal, where the first-type measurement configuration information is associated with a first-type reference signal, and the second-type measurement configuration information is associated with a second-type reference signal.

Optionally, in this embodiment, the storage medium may include, but are not limited to, a U disk, a read-only memory (ROM), a random access memory (RAM), a mobile hard disk, a magnetic disk, an optical disk or another medium capable of storing program codes.

Optionally, in this embodiment, the processor configures the first-type measurement configuration information and the second-type measurement configuration information according to the program codes stored in the storage medium.

Optionally, in this embodiment, according to the program codes stored in the storage medium, the processor uses a parameter set to jointly indicate the first-type measurement configuration information and the second-type measurement configuration information to a terminal, where the first-type measurement configuration information is associated with a first-type reference signal, and the second-type measurement configuration information is associated with a second-type reference signal.

Optionally, for specific examples in this embodiment, reference may be made to the examples described in the preceding embodiments and optional implementations, and the specific examples will not be repeated in this embodiment.

Apparently, those skilled in the art should know that each above-mentioned module or step of the present invention may be implemented by a universal computing device, they may be concentrated on a single computing device or distributed in a network formed by multiple computing devices, and alternatively, they may be implemented by program codes executable by the computing devices, so that they may be stored in a storage device for execution by the computing devices, and in some circumstances, the illustrated or described steps may be executed in sequences different from those described herein, or they may be made into various integrated circuit modules separately, or multiple modules or steps therein may be made into a single integrated circuit module for implementation. Therefore, the present invention is not limited to any specific combination of hardware and software.

The above are only preferred embodiments of the present invention and are not intended to limit the present invention, and for those skilled in the art, the present invention may have various modifications and variations. Any modifications, equivalent substitutions, improvements and the like made within the spirit and principle of the present invention are within the scope of the present invention.

### INDUSTRIAL APPLICABILITY

As described above, a method and apparatus for configuring and determining a reference signal, a base station, and a terminal provided by embodiments of the present invention have the following beneficial effects: two types of channel state information reference signals: the first-type reference signal and the second-type reference signal are jointly configured so that a receiving end associates the two types of reference signals when receiving channel state information reference signals, thereby solving the problem where the accuracy of channel measurement and channel information feedback is low in the related art.

## Claims

1. A method for configuring a reference signal, comprising:
configuring, by a base station, first-type measurement configuration information and second-type measurement configuration information; and
jointly indicating, by the base station, the first-type measurement configuration information and the second-type measurement configuration information to a terminal based on a parameter set, wherein the first-type measurement configuration information is associated with a first-type reference signal, and the second-type measurement configuration information is associated with a second-type reference signal.

2. The method of claim 1, wherein the parameter set comprises: information for indicating a period of the first-type reference signal, and/or information for indicating a period of the second-type reference signal.

3. The method of claim 1 or 2, wherein the period of the first-type reference signal is greater than or equal to T1 subframes, and T1 is a positive integer greater than zero.

4. The method of claim 3, wherein the base station determines a value of the T1 by one or more of the following pieces of information:
information about terminal capability classification; information about a maximum number of reference signal resources processable by the terminal; and information about a maximum number of reference signal ports processable by the terminal.

5. The method of claim 2, wherein the period of the first-type reference signal is greater than the period of the second-type reference signal.

6. The method of claim 2, wherein the base station jointly indicates the period of the first-type reference signal and/or the period of the second-type reference signal to the terminal in the parameter set by one or more of the following:
the base station notifies the period of the first-type reference signal and a parameter for describing a relationship between periods of two types of reference signals; and
the base station notifies the period of the second-type reference signal and the parameter for describing the relationship between the periods of the two types of reference signals, wherein the two types of reference signals are the first-type reference signal and the second-type reference signal.

7. The method of claim 6, wherein the parameter for describing the relationship between the periods of the two types of reference signals comprises: information for indicating a multiple relationship between the period of the first-type reference signal and the period of the second-type reference signal or information for indicating a difference relationship between the period of the first-type reference signal and the period of the second-type reference signal.

8. The method of claim 1, wherein the parameter set comprises: information for indicating power of the first-type reference signal on each resource unit and power of the second-type reference signal on the each resource unit.

9. The method of claim 8, wherein the power of the first-type reference signal on the each resource unit is greater than the power of the second-type reference signal on the each resource unit.

10. The method of claim 8, wherein the base station jointly indicates the power of the first-type reference signal and/or the power of the second-type reference signal in the parameter set by one or more of the following:
the base station notifies the power of the first-type reference signal on the each resource unit and a parameter for describing a relationship between power of two types of reference signals; and
the base station notifies the power of the second-type reference signal on the each resource unit and the parameter for describing the relationship between the power of the two types of reference signals.

11. The method of claim 9 or 10, wherein the parameter for describing the relationship between the power of the two types of reference signals comprises: information for indicating a multiple relationship between the power of the first-type reference signal and the power of the second-type reference signal on the each resource unit or information for indicating a difference relationship between the power of the first-type reference signal and the power of the second-type reference signal on the each resource unit.

12. The method of claim 9 or 10, wherein the parameter set comprises: information for indicating codebook subset restriction of the first-type reference signal, wherein the codebook subset restriction is not enabled for the second-type reference signal.

13. The method of claim 1, wherein the first-type measurement configuration information is configuration information of a first-type interference measurement resource associated with the first-type reference signal, and the second-type measurement configuration information is configuration information of a second-type interference measurement resource associated with the second-type reference signal.

14. The method of claim 13, wherein the parameter set comprises: information for jointly indicating interference measurement restriction.

15. The method of claim 13, wherein the configuring, the base station, by the first-type measurement configuration information and the second-type measurement configuration information comprises:
configuring, by the base station, a same interference measurement restriction state for the first-type interference measurement resource and the second-type interference measurement resource.

16. The method of claim 13, wherein the parameter set comprises: information for indicating a period of the first-type interference measurement resource, and/or information for indicating a period of the second-type interference measurement resource.

17. The method of claim 13 or 16, wherein the period of the first-type interference measurement resource is not less than T2 subframes, and T2 is a positive integer greater than 0; and/or the period of the first-type interference measurement resource is greater than the period of the second-type interference measurement resource.

18. The method of claim 17, wherein the base station determines a value of the T2 by one or more of the following pieces of information: information about terminal capability classification; information about a maximum number of reference signal resources processable by the terminal; and information about a maximum number of reference signal ports processable by the terminal.

19. The method of claim 13 or 16, wherein the base station jointly indicates the period of the first-type interference measurement resource and/or the period of the second-type interference measurement resource to the terminal in the parameter set by one or more of the following:
the base station notifies the period of the first-type interference measurement resource and a parameter for describing a relationship between periods of two types of interference measurement resources; and
the base station notifies the period of the second-type interference measurement resource and the parameter for describing the relationship between the periods of the two types of interference measurement resources.

20. The method of claim 19, wherein the parameter for describing the relationship between the periods of the two types of interference measurement resources comprises: information for indicating a multiple relationship between the period of the first-type interference measurement resource and the period of the second-type interference measurement resource or information for indicating a difference relationship between the period of the first-type interference measurement resource and the period of the second-type interference measurement resource.

21. The method of claim 1, wherein the first-type measurement configuration information is feedback configuration information of CSI obtained by measuring the first-type reference signal, and the second-type measurement configuration information is feedback configuration information of CSI obtained by measuring the second-type reference signal.

22. The method of claim 21, wherein the feedback configuration information is feedback mode configuration information, which comprises at least one of the following: a feedback mode of the CSI obtained based on the first-type reference signal is a periodic feedback, and a feedback mode of the CSI obtained based on the second-type reference signal is a periodic feedback; the feedback mode of the CSI obtained based on the first-type reference signal is the periodic feedback, and the feedback mode of the CSI obtained based on the second-type reference signal is an aperiodic feedback; the feedback mode of the CSI obtained based on the first-type reference signal is the aperiodic feedback, and the feedback mode of the CSI obtained based on the second-type reference signal is the periodic feedback.

23. The method of claim 22, wherein the parameter set comprises: information for indicating a feedback period of the CSI obtained by measuring the first-type reference signal, and/or information for indicating a feedback period of the CSI obtained by measuring the second-type reference signal.

24. The method of claim 22 or 23, wherein the CSI obtained by measuring the first-type reference signal is not less than T3 subframes, and the T3 is a positive integer greater than zero.

25. The method of claim 24, wherein the base station determines a value of the T3 by one or more of the following pieces of information: information about terminal capability classification; information about a maximum number of reference signal resources processable by the terminal; and information about a maximum number of reference signal ports processable by the terminal.

26. The method of claim 22 or 23, wherein the feedback period of the CSI obtained by measuring the first-type reference signal is greater than the feedback period of the CSI obtained by measuring the second-type reference signal.

27. The method of claim 22 or 23, wherein the base station jointly indicates the feedback period of the CSI obtained by measuring the first-type reference signal and/or the feedback period of the CSI obtained by measuring the second-type reference signal to the terminal in the parameter set by one or more of the following:
the base station notifies the feedback period of the CSI obtained by measuring the first-type reference signal and a parameter for describing a relationship between two types of feedback periods; and
the base station notifies the feedback period of the CSI obtained by measuring the second-type reference signal and the parameter for describing the relationship between the two types of feedback periods.

28. The method of claim 27, wherein the parameter for describing the relationship between the two types of feedback periods comprises: information for indicating a multiple relationship between the feedback period of the CSI obtained by measuring the first-type reference signal and the feedback period of the CSI obtained by measuring the second-type reference signal or information for indicating a difference relationship between the feedback period of the CSI obtained by measuring the first-type reference signal and the feedback period of the CSI obtained by measuring the second-type reference signal.

29. The method of claim 23, wherein the parameter set comprises: information for triggering the aperiodic CSI feedback.

30. The method of claim 1, wherein the parameter set corresponds to one measurement feedback process.

31. The method of any one of claims 1 to 30, wherein the first-type reference signal is a non-precoded reference signal and the second-type reference signal is a precoded reference signal; or the first-type reference signal and the second-type reference signal are non-precoded reference signals having at least one of the following parameters being different: resource and port; or the first-type reference signal and the second-type reference signal are precoded reference signals having at least one of the following parameters being different: resource and port.

32. A method for determining a reference signal, comprising:
Acquiring, by a terminal, a parameter set and a measurement configuration information set, wherein the parameter set is configured such that a base station jointly indicates first-type measurement configuration information and second-type measurement configuration information; and
jointly determining, by the terminal, the first-type measurement configuration information and the second-type measurement configuration information according to the parameter set, wherein the first-type measurement configuration information is associated with a first-type reference signal, and the second-type measurement configuration information is associated with a second-type reference signal.

33. The method of claim 32, wherein the parameter set comprises: information for indicating a period of the first-type reference signal, and/or information for indicating a period of the second-type reference signal.

34. The method of claim 32 or 33, wherein the period of the first-type reference signal is greater than or equal to T1 subframes, and T1 is a positive integer greater than zero.

35. The method of claim 34, wherein the terminal determines a value of the T1 by reporting one or more of the following pieces of information:
information about terminal capability classification; information about a maximum number of reference signal resources processable by the terminal; and information about a maximum number of reference signal ports processable by the terminal.

36. The method of claim 33, wherein the period of the first-type reference signal is greater than the period of the second-type reference signal.

37. The method of claim 33, wherein the terminal determines the period of the first-type reference signal and/or the period of the second-type reference signal in the parameter set by one or more of the following:
the terminal acquires the period of the first-type reference signal and a parameter for describing a relationship between periods of two types of reference signals; and
the terminal acquires the period of the second-type reference signal and the parameter for describing the relationship between the periods of the two types of reference signals, wherein the two types of reference signals are the first-type reference signal and the second-type reference signal.

38. The method of claim 37, wherein the parameter for describing the relationship between the periods of the two types of reference signals comprises: information for indicating a multiple relationship between the period of the first-type reference signal and the period of the second-type reference signal or information for indicating a difference relationship between the period of the first-type reference signal and the period of the second-type reference signal.

39. The method of claim 32, wherein the parameter set comprises: information for indicating power of the first-type reference signal on each resource unit and power of the second-type reference signal on the each resource unit.

40. The method of claim 39, wherein the power of the first-type reference signal on the resource unit is greater than the power of the second-type reference signal on the resource unit.

41. The method of claim 39, wherein the terminal jointly determines the power of the first-type reference signal and/or the power of the second-type reference signal in the parameter set by one or more of the following:
the terminal acquires the power of the first-type reference signal on the each resource unit and a parameter for describing a relationship between power of two types of reference signals; and
the terminal acquires the power of the second-type reference signal on the each resource unit and the parameter for describing the relationship between the power of the two types of reference signals.

42. The method of claim 40 or 41, wherein the parameter for describing the relationship between the power of the two types of reference signals comprises: information for indicating a multiple relationship between the power of the first-type reference signal and the power of the second-type reference signal on the each resource unit or information for indicating a difference relationship between the power of the first-type reference signal and the power of the second-type reference signal on the each resource unit.

43. The method of claim 40 or 41, wherein the parameter set comprises: information for indicating codebook subset restriction of the first-type reference signal, wherein the codebook subset restriction is not enabled for the second-type reference signal.

44. The method of claim 32, wherein the first-type measurement configuration information is configuration information of a first-type interference measurement resource associated with the first-type reference signal, and the second-type measurement configuration information is configuration information of a second-type interference measurement resource associated with the second-type reference signal.

45. The method of claim 44, wherein the parameter set comprises: information for jointly indicating interference measurement restriction.

46. The method of claim 44, wherein the first-type interference measurement resource and the second-type interference measurement resource have a same interference measurement restriction state.

47. The method of claim 44, wherein the parameter set comprises: information for indicating a period of the first-type interference measurement resource, and/or information for indicating a period of the second-type interference measurement resource.

48. The method of claim 44 or 47, wherein the period of the first-type interference measurement resource is not less than T2 subframes, and T2 is a positive integer greater than 0.

49. The method of claim 48, wherein the terminal determines a value of the T2 by reporting one or more of the following pieces of information: information about terminal capability classification; information about a maximum number of reference signal resources processable by the terminal; and information about a maximum number of reference signal ports processable by the terminal.

50. The method of claim 44 or 47, wherein the period of the first-type interference measurement resource is greater than the period of the second-type interference measurement resource.

51. The method of claim 44 or 47, wherein the terminal jointly determines the period of the first-type interference measurement resource and/or the period of the second-type interference measurement resource in the parameter set by one or more of the following:
the terminal acquires the period of the first-type interference measurement resource and a parameter for describing a relationship between periods of two types of interference measurement resources; and
the terminal acquires the period of the second-type interference measurement resource and the parameter for describing the relationship between the periods of the two types of interference measurement resources.

52. The method of claim 51, wherein the parameter for describing the relationship between the periods of the two types of interference measurement resources comprises: information for indicating a multiple relationship between the period of the first-type interference measurement resource and the period of the second-type interference measurement resource or information for indicating a difference relationship between the period of the first-type interference measurement resource and the period of the second-type interference measurement resource.

53. The method of claim 32, wherein the first-type measurement configuration information is feedback configuration information of CSI obtained by measuring the first-type reference signal, and the second-type measurement configuration information is feedback configuration information of CSI obtained by measuring the second-type reference signal.

54. The method of claim 53, wherein the feedback configuration information is feedback mode configuration information, which comprises at least one of the following: a feedback mode of the CSI obtained based on the first-type reference signal is a periodic feedback, and a feedback mode of the CSI obtained based on the second-type reference signal is the periodic feedback; the feedback mode of the CSI obtained based on the first-type reference signal is the periodic feedback, and the feedback mode of the CSI obtained based on the second-type reference signal is an aperiodic feedback; the feedback mode of the CSI obtained based on the first-type reference signal is the aperiodic feedback, and the feedback mode of the CSI obtained based on the second-type reference signal is the periodic feedback.

55. The method of claim 53 or 54, wherein the parameter set comprises: information for indicating a feedback period of the CSI obtained by measuring the first-type reference signal, and/or information for indicating a feedback period of the CSI obtained by measuring the second-type reference signal.

56. The method of claim 53 or 54, wherein the CSI obtained by measuring the first-type reference signal is not less than T3 subframes, and the T3 is a positive integer greater than zero.

57. The method of claim 56, wherein the terminal determines a value of the T3 by reporting one or more of the following pieces of information: information about terminal capability classification; information about a maximum number of reference signal resources processable by the terminal; and information about a maximum number of reference signal ports processable by the terminal.

58. The method of claim 53 or 54, wherein the feedback period of the CSI obtained by measuring the first-type reference signal is greater than the feedback period of the CSI obtained after the second-type reference signal is measured.

59. The method of claim 54 or 56, wherein the terminal jointly determines the feedback period of the CSI obtained by measuring the first-type reference signal and/or the feedback period of the CSI obtained by measuring the second-type reference signal in the parameter set by one or more of the following:
the terminal acquires the feedback period of the CSI obtained by measuring the first-type reference signal and a parameter for describing a relationship between two types of feedback periods; and
the terminal acquires the feedback period of the CSI obtained by measuring the second-type reference signal and the parameter for describing the relationship between the two types of feedback periods.

60. The method of claim 59, wherein the parameter for describing the relationship between the two types of feedback periods comprises: information for indicating a multiple relationship between the feedback period of the CSI obtained by measuring the first-type reference signal and the feedback period of the CSI obtained by measuring the second-type reference signal or information for indicating a difference relationship between the feedback period of the CSI obtained by measuring the first-type reference signal and the feedback period of the CSI obtained by measuring the second-type reference signal.

61. The method of claim 54, wherein the parameter set comprises: information for triggering the aperiodic CSI feedback.

62. The method of claim 32, wherein the parameter set corresponds to one measurement feedback process.

63. The method of claim 32 or 62, wherein, according to whether there are two types of measurement configuration information, the terminal determines a time interval between a CSI reference resource time-domain location corresponding to the first-type reference signal and a time-domain location reported by CSI and/or a time interval between a CSI reference resource time-domain location corresponding to the second-type reference signal and the time-domain location reported by the CSI.

64. The method of any one of claims 32 to 62, wherein the first-type reference signal is a non-precoded reference signal and the second-type reference signal is a precoded reference signal; or the first-type reference signal and the second-type reference signal are non-precoded reference signals having at least one of the following parameters being different: resource and port; or the first-type reference signal and the second-type reference signal are non-precoded reference signals having at least one of the following parameters being different: resource and port.

65. An apparatus for configuring a reference signal, comprising:
a configuration module, which is configured to configure first-type measurement configuration information and second-type measurement configuration information; and
an indicating module, which is configured to use a parameter set to jointly indicate the first-type measurement configuration information and the second-type measurement configuration information to a terminal, wherein the first-type measurement configuration information is associated with a first-type reference signal, and the second-type measurement configuration information is associated with a second-type reference signal.

66. The apparatus of claim 65, wherein the parameter set comprises: information for indicating a period of the first-type reference signal, and/or information for indicating a period of the second-type reference signal.

67. The apparatus of claim 66, wherein the indicating module jointly indicates the period of the first-type reference signal and/or the period of the second-type reference signal to the terminal in the parameter set by one or more of the following:
the base station notifies the period of the first-type reference signal and a parameter for describing a relationship between periods of two types of reference signals; and
the base station notifies the period of the second-type reference signal and the parameter for describing the relationship between the periods of the two types of reference signals, wherein the two types of reference signals are the first-type reference signal and the second-type reference signal.

68. An apparatus for determining a reference signal, comprising:
an acquisition module, which is configured to acquire a parameter set and a measurement configuration information set, wherein the parameter set is configured such that a base station jointly indicates first-type measurement configuration information and second-type measurement configuration information; and
a determining module, which is configured to determine the first-type measurement configuration information and the second-type measurement configuration information according to the parameter set, wherein the first-type measurement configuration information is associated with a first-type reference signal, and the second-type measurement configuration information is associated with a second-type reference signal.

69. The apparatus of claim 68, wherein the parameter set comprises: information for indicating a period of the first-type reference signal, and/or information for indicating a period of the second-type reference signal.

70. The apparatus of claim 69, wherein the determining module determines the period of the first-type reference signal and/or the period of the second-type reference signal in the parameter set by one or more of the following:
the terminal acquires the period of the first-type reference signal and a parameter for describing a relationship between periods of two types of reference signals; and
the terminal acquires the period of the second-type reference signal and the parameter for describing the relationship between the periods of the two types of reference signals, wherein the two types of reference signals are the first-type reference signal and the second-type reference signal.

71. Abase station, comprising:
a configuration circuit, which is configured to configure first-type measurement configuration information and second-type measurement configuration information; and
a radio frequency circuit, which is configured to use a parameter set to jointly indicate the first-type measurement configuration information and the second-type measurement configuration information to a terminal, wherein the first-type measurement configuration information is associated with a first-type reference signal, and the second-type measurement configuration information is associated with a second-type reference signal.

72. The base station of claim 71, wherein the parameter set comprises: information for indicating a period of the first-type reference signal, and/or information for indicating a period of the second-type reference signal.

73. A terminal, comprising:
a radio frequency circuit, which is configured to acquire a parameter set and a measurement configuration information set, wherein the parameter set is configured such that a base station jointly indicates first-type measurement configuration information and second-type measurement configuration information; and
a processor, which is configured to determine the first-type measurement configuration information and the second-type measurement configuration information according to the parameter set, wherein the first-type measurement configuration information is associated with a first-type reference signal, and the second-type measurement configuration information is associated with a second-type reference signal.

74. The terminal of claim 73, wherein the parameter set comprises: information for indicating a period of the first-type reference signal, and/or information for indicating a period of the second-type reference signal.
